# EUROPEAN PATENT SPECIFICATION

(11) **EP 1 860 821 B1**
(45) Date of publication and mention of the grant of the patent: **01.09.2010**
(21) Application number: 06010916.2
(22) Date of filing: 26.05.2006
(51) Int. Cl.: H04L 12/24, G02B 6/02, G05B 19/00, G05B 19/02, B62D 5/00, B60T 13/00, H04L 12/437

(54) **Plastic optical fibre network for electronic control units and power electronics in by-wire vehicles**
Kunststoffglasfasernetz für elektronische Steuereinheiten und Leistungselektronik in By-Wire-Fahrzeugen
Réseau de fibre optique en plastique pour les unités de contrôle électronique et électronique de puissance dans les véhicules à compresseur d'alimentation

(43) Date of publication of application: 28.11.2007
(73) Proprietor: Fondazione Torino Wireless, 10129 Torino (IT); POLITECNICO DI TORINO, 10129 Torino (IT)
(72) Inventor: Carabelli, Stefano, Casena Torinese (IT); Chiaberge, Marcello, Collegno (IT)
(74) Representative: Mola, Edoardo

(56) References cited:
- EP-A2- 1 219 525
- WO-A-01/13186
- WO-A-2004/005095
- US-A- 4 967 409
- US-A1- 2002 046 309
- US-A1- 2005 033 816
- US-A1- 2005 201 409

## Description

### FIELD OF THE PRESENT INVENTION

The present invention relates to a control device for controlling power devices of a means of transport, comprising a first and a second electronic control unit which are interconnected, wherein the first and the second electronic control units are connectable to a first and a second power device, respectively. The present invention further relates to a series control network and a ring control network comprising such a control device and further electronic control units, interconnected in series or in a ring, respectively. The present invention also relates to a driving device for driving a first and a second electric motor with electric power, comprising said control device and a first and a second power electronics unit, which are connectable to the first and the second electric motor, respectively. Moreover, the present invention relates to a series driving network and a ring driving network for driving electric motors with electric power which comprise said series control network and said ring control network, respectively. The present invention also relates to an actuation system comprising said series driving network or said ring driving network and electric motors. Finally, the present invention relates to vehicles comprising said actuation systems.

### DESCRIPTION OF THE PRIOR ART

The replacement of mechanical and hydraulic control mechanisms in means of transport, such as airplanes or automobiles with electronic systems has become known as by-wire technology. This technology first appeared in aviation and today many civil and most military aircrafts rely on fly-by-wire, improving the performance and safety over conventional flight control systems. In automotive applications for the by-wire technology, throttle by-wire and brake by-wire have been developed. Steer-by-wire poses a significant change to conventional automotive systems and promises to significantly improve the handling of the vehicle and the driving safety.
Further, hybrid technology has been applied to vehicles, where an electric motor or electric motors are driven by a battery in addition to the usual combustion engine.

In any of these transport means, electronic control units and power electronics are interconnected for exchanging data between them. In these applications, it is mandatory to provide redundant systems and safe communication channels between electronic subsystems. These requirements lead to a considerable amount of interconnecting wiring for the electric actuation systems with electric motors, power electronics and electronic control units. These interconnections have so far been designed with copper wiring.

Several main problems and drawbacks effect the application of copper wiring. In automobile applications, the weight of the wiring can raise up to 80 kg with evident problems concerning mass and space of the vehicle. The length of the wiring may cause communication channel bandwidth shortcuts and increase problems concerning the electromagnetic immunity by the generation and capture of electromagnetic noise. Electromagnetic immunity problems also arise due to short distances between communication cables and power cables, which may cause problems of safe communication between different systems, such as the communication between the electronic control units themselves, or between the electronic control units and the power electronics.

The patent document WO 01/13186 discloses electronic control units connected to local power units over optical fibre cables.

For safety reasons, often a redundant architecture is chosen for important installations such as brakes or steering. For example, a redundant servo system for a generic actuator is known, wherein two electric motors operate on the same installation, so that if one of the motors or a driving component thereof fails, the other motor may at least partially perform the desired actuation. Each electric motor is driven by a separate power electronics unit and both power electronics components are driven by a single electronic control unit. Here, the redundancy is split both on the actuation by providing two electric motors and on the driving electronics. However, this architecture is not safe against failure on the single computing electronic control unit while it is redundant if one of the two driving lines fails. Only in the latter case, will the system continue working, although with a degradation in terms of performance.

An improvement of the driving chain contains two electronic control units, each driving one of the power electronics units, and the electronic control units are synchronized by using a hard real time bus. The hard real time bus must have a high bandwidth in order to guarantee the correct synchronization between the two driving lines. The hard real time bus is used to share driving parameters, time constraints and alarms between the two electronic control units in a shared memory. For safety, the master role can be periodically exchanged between the two electronic control units. Typically, the hard real time bus is a parallel bus on copper wires.

This solution improves the fault tolerance, but involves the following problems. The two electronic control units must be close to each other or at least are on the same board, since otherwise the parallel hard real time bus will be affected by electromagnetic problems. Further, the copper connection between the electronic control units and the power electronics can be a source of electromagnetic noise very close to a critical bus for the performance of the system. Moreover, the galvanic isolation between electronic control units and high power electronics must be carefully considered in order to avoid loop currents and reference level misalignment, which are fatal for the communication between the components.

### SUMMARY OF THE INVENTION

It is therefore an object of the present invention to improve the communication, i.e. the exchange of data, between power devices in a means of transport, such as an automobile, an airplane or a ship, in that electromagnetic problems can be substantially avoided. Further, it is an object of the present invention to reduce the generation of electromagnetic noise near critical components of a vehicle. Still another object of the present invention is the reduction of the weight of interconnections between power devices in a vehicle. Yet another object of the present invention is to improve the fault tolerance of important systems in a vehicle, in particular in a by-wire vehicle.

According to the present invention, these objects are achieved by a driving device for controlling power devices of a means of transport according to claim 1.

A plastic optical fiber is an innovative way to interconnect two electronic control units in a vehicle with several advantages. A plastic optical fiber enables high-speed optical transmission of data with a transmission rate of up to 100 Mbps with low-cost current technologies when compared with copper costs. The weight of a plastic optical fiber is 6 kg/km versus 18 kg/km of a typical unipolar copper wire.

Further, since the data exchange is based on optical communication there is no cross talk between cables, so that the plastic optical fiber is electromagnetically immune. The use of plastic optical fibers as the interconnection between two electronic control units leads to an electrical galvanic isolation between the electronic control units and the power electronics circuits by a safe and easy split power supply for them. Further, no sparks are generated in the plastic optical fibers. Moreover, they are easy to handle and to connect, whereas for example, glass optical fibers are extremely fragile, and they can be operated in a wide temperature range with a high reliability.

Alternatively, the interconnection may comprise a bi-directional plastic optical fiber; furthermore, two single-directional plastic optical fibers are provided.

According to a first embodiment of the driving device according to the invention, the first and the second electronic control units are synchronized via the bi-directional plastic optical fiber or the two single-directional fibers.

A control device according to said first embodiment may be used in fault-tolerant actuation system, where two electric motors operate on the same installation of a vehicle. The synchronization of the electronic control units has the advantage that the two motors may be driven in the same way to perform the same operation.

According to a further embodiment of the driving device according to the present invention, the first electronic control unit may operate as a master electronic control unit for the second electronic control unit, such that the first electronic control unit may control the second control unit.

In said further embodiment, one of the electronic control units takes the function or the role to be the master electronic control unit for the other electronic control unit, such that the latter takes the function or the role of a slave electronic control unit. This has the advantage that only the master electronic control unit might be connected to a complete communication network, whereas the slave electronic control unit may only be connected to the master control electronic unit.

According to still a further embodiment a driving device is provided, wherein the operation as the master electronic control unit can be exchanged among the first and the second electronic control unit.

In this embodiment the function or the role to be the master can be exchanged between the two electronic control units, which improves the safety of the system, wherein such a control device is used.

According to another embodiment of the present invention a driving device is provided, wherein the operation as the master electronic control unit can be exchanged periodically.

Periodically exchanging the function or the role to be the master can further improve the system safety. The period of exchange may be chosen small compared, for example, to the time it takes to actuate an installation such as a brake of a vehicle, so that a malfunctioning of one of the electronic control units does not lead to a complete malfunction of the actuation system.

According to a further embodiment, a series driving network comprises the device according to the invention and at least one further electronic control unit, interconnected in series to the first or second electronic control unit, wherein each interconnection comprises a bi-directional plastic optical fiber or two single-directional plastic optical fibers through which data can be exchanged.

In such a series control network, at least three or more electronic control units are interconnected in series or chain-like, one after the other, wherein the interconnections between two successive electronic control units include one or two plastic optical fibers. In this development, three or more electronic control units can communicate among each other by transmitting data via the plastic optical fibers.

According to still a further embodiment of the present invention thre is provided a series driving network, wherein one of the at least one further electronic control unit is a vehicle dynamic controller which serves as a master electronic control unit for the other electronic control units.

In this embodiment, the vehicle dynamic controller can take the function to be a computation and control center for the other electronic control units. The vehicle dynamic controller may contain a faster central processing unit and/or a larger storage memory than the other electronic control units. This has the advantage that only a single powerful computing unit has to be provided, which saves overall costs.

There is also provided a series driving network, wherein the vehicle dynamic controller is not connectable to any of the power devices and each of the other electronic control units is connectable to respectively one of the power devices.

In this embodiment, the vehicle dynamic controller is only connected to the two neighboring electronic control units, but not to any of the power devices. This has the advantage that the vehicle dynamic controller can be designed to optimally perform its control function for the other electronic control units, but does not have to control any power electronics components, for example. The other electronic control units are respectively connectable to one of the power devices, which may for example be power electronic circuits.

According to a further embodiment, the present invention relates to a ring control network, comprising a series driving network according to one of the above mentioned embodiments, wherein the two electronic control units at the two ends of the series are interconnected by a further bi-directional plastic optical fiber or by two further single-directional plastic optical fibers through which data can be exchanged.

In this embodiment, all electronic control units are interconnected in a ring-like manner, such that each electronic control unit is interconnected to two neighboring electronic control units. In this configuration, each of the electronic control units can send data to each of the other electronic control units or receive data from each of the other electronic control units. The data is transmitted on the ring. This configuration avoids a complex architecture of interconnections. At the same time, a good degree of redundancy is achieved. In fact, if a network hop, i.e. a data transfer between two neighboring electronic control units fails, for example, because one of the opto-electronic couplers or optical transceivers fails, a data exchange between these two electronic control units is still possible in the opposite direction along the ring, that is via all the other interconnected electronic control units.

According to still a further embodiment, the present invention relates to a ring control network, comprising at least three driving devices according to one of the above mentioned embodiments, wherein the respective first electronic control units of the control devices are further interconnected in a ring-like manner, such that each interconnection comprises a further bi-directional plastic optical fiber or two further single-directional plastic optical fibers through which data can be exchanged.

In this embodiment, at least three control devices are provided, each one comprising a pair of electronic control units, and one of the electronic control units of each pair is interconnected to one electronic control unit of the two other control devices, in such a manner that the interconnection forms a ring-like structure. Thereby, the control devices can transmit data along the ring network in both directions, which provides the benefits that are already mentioned in the previous development.

A further embodiment of the present invention relates to a ring control network, comprising at least two driving devices according to one of the above mentioned embodiments, and a vehicle dynamic controller, wherein the respective first electronic control units of the control devices and the vehicle dynamic control are further interconnected in a ring-like manner, such that each interconnection comprises a further bi-directional plastic optical fiber or two further single-directional plastic optical fibers through which data can be exchanged.

According to this embodiment, the first electronic control units of the control devices are interconnected with the vehicle dynamic controller in a ring-like manner. In this way, a ring control network is formed that incorporates a vehicle dynamic controller which may control the electronic control units of the control device.

According to still a further embodiment of the present invention there is also provided a ring control network, comprising at least three driving devices, wherein all the electronic control units of the control device are further interconnected in a ring-like manner, such that each interconnection comprises a further bi-directional plastic optical fiber or two further single-directional plastic optical fibers through which data can be exchanged.

According to this embodiment, at least three pairs of electronic control units are interconnected in the ring control network, such that data can be exchanged between all of them along the ring. In such a ring control network also the interconnections between the electronic control units of the control devices are included in the ring control network.

Still another embodiment of the present invention relates to a ring-control network, comprising at least two driving devices according to one of the previous embodiments along with a vehicle dynamic controller, wherein all the electronic control units of the control devices and the vehicle dynamic controller are further interconnected in a ring-like manner, such that each interconnection comprises a further bi-directional plastic optical fiber or two further single-directional plastic optical fibers through which data can be exchanged.

According to this embodiment, all of the electronic control units and the vehicle dynamic controller are interconnected in a ring-like network.

According to a further embodiment of the present invention there is also provided a ring control network, wherein four control devices are provided.

This embodiment is particularly suited for a four-wheeled vehicle in which a control device is provided for each wheel (corner).

Still a further embodiment of the present invention relates to a ring control network, wherein a particular one of the electronic control units is designed such that it can detect a defective interconnection.

According to this embodiment, a defect or a malfunction of an interconnection between two electronic control units can be detected by the particular electronic control unit. This information may be used to report the defect to a vehicle dynamic controller where this information may be stored and/or may be used to adjust the ring control network to this situation, such that particular directions of information exchange along the ring network may be reversed.

According to another embodiment, the present invention relates to a ring control network, wherein the particular electronic control unit sends a test signal in both directions along the ring control network.

In this embodiment, a test signal may be sent along the ring control network in both directions for detecting a defective interconnection. This particular electronic control unit may send the test signal and as well receive the test signal, so that a defective interconnection would be detected by failing to receive it. Further, the particular electronic control unit may detect the location of the defective interconnection by sending test signals to respective ones of the other control units and receive a response from them.

According to still a further embodiment, the present invention relates to a ring control network, wherein the other electronic control units can send a confirmation signal to the particular electronic control unit, for confirming a reception of the test signal.

In this embodiment, the other electronic control units may send a confirmation signal to the particular electronic control unit, such that the particular electronic control unit obtains the information if the other electronic control units function properly, and if a malfunctioning of an interconnection occurs, the exact location of the defect is obtained.

According to a further embodiment, the present invention relates to an actuation system according, wherein respectively two motors may operate the same installation of a vehicle.

According to this embodiment, for example respectively two motors may be provided to brake a particular wheel of a vehicle, such that a fault tolerant actuation system is achieved.

There is also provided a vehicle, in particular a brake-by-wire vehicle with four wheels, comprising an actuation system according to the present invention along with four electric motors, provided one for each wheel of the vehicle, such that the electric motors may brake the respective wheels.

According to this embodiment, such a vehicle is provided with an actuation system for braking each wheel of the vehicle with a respective electric motor.

According to the present invention there is also provided a vehicle, in particular a brake-by-wire vehicle with four wheels, comprising an actuation system including eight electric motors, provided two for each wheel of the vehicle, such that the respective two electric motors may operate a respective brake installation of the respective wheel.

According to this embodiment, such a vehicle is provided with a fault tolerant actuation system for operating the brakes of the vehicle.

Still according to the present invention there is further provided a vehicle, in particular a drive-by-wire vehicle with four wheels, comprising an actuation system including two electric motors, provided one for each front wheel of the vehicle or one for each rear wheel of the vehicle, such that the electric motors may drive the respective wheels.

According to this embodiment, such a vehicle is provided with an actuation system with the above-mentioned advantages, wherein either the front wheels or the rear wheels of the vehicle are driven by the electric motors, wherein the electric power for the electric motors may be provided, for example, by a battery included in the vehicle.

Still a further embodiment of the present invention relates to a vehicle, in particular, a drive-by-wire vehicle with four wheels, comprising an actuation including four electric motors, provided one for each wheel of the vehicle, such that the electric motors may drive the respective wheels.

According to this embodiment, a vehicle is provided with an actuation system with four electric motors, such that each of the electric motors may drive a respective wheel of the vehicle.

According to another embodiment, the present invention relates to a vehicle, in particular a steer-by-wire vehicle, comprising an actuation system including two electric motors, provided such that the two electric motors may operate a steering installation of the vehicle.

According to this embodiment, a vehicle is provided with an actuation system with two electric motors that may be operated to steer the vehicle in a fault-tolerant way, in that if one of the two electric motors fails, the other electric motor may still function to perform the desired steering operation.

### BRIEF DESCRIPTION OF THE DRAWINGS

In the following, a description will be given with reference to the drawings of particular and/or preferred embodiments of the present invention; it has, however, to be noted that the present invention is not limited to the embodiments disclosed, but that the embodiments disclosed only relate to particular examples of the present invention, the scope of which is defined by the appended claims. In particular, in the drawings:
Fig. 1 relates to an embodiment of a control device according to the invention;
Fig. 2 relates to an embodiment of a series control network according to the invention;
Fig. 3 relates to an embodiment of a ring control network according to the invention;
Fig. 4 relates to an embodiment of a driving device according to the invention;
Fig. 5 relates to an embodiment of a ring driving network according to the invention; and
Fig. 6 relates to an embodiment of an actuation system according to the invention.

### DETAILED DESCRIPTION

While the present invention is described with reference to the embodiments as illustrated in the following detailed description as well as in the drawings, it should be understood that the following detailed description as well as the drawings are not intended to limit the present invention to the particular illustrative embodiments disclosed, but rather the described illustrative embodiments merely exemplify the various aspects of the present invention, the scope of which is defined by the appended claims.

In order to replace mechanical linkages in vehicles, such as for example automobiles or aircrafts, with wires, systems for the electronic control of these vehicles have been developed. These systems generally involve electronic control units. An electronic control unit includes a microprocessor, a random access memory, a read-only memory, and an input/output interface. In a by-wire vehicle, such electronic control units are used to control power electronic units, which in turn can drive a motor operating on a particular installation of the vehicle, such as a brake system or a steering system.

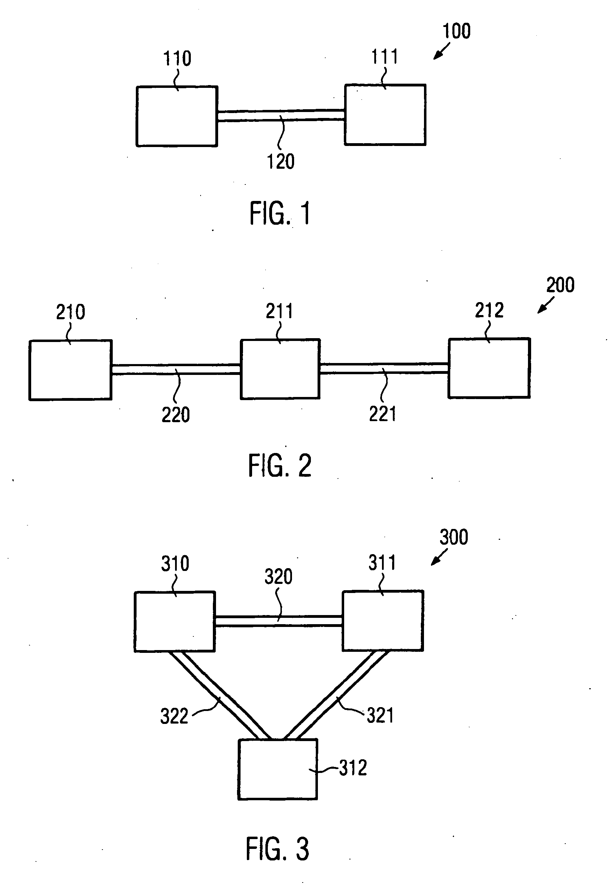

In the following, with reference to Fig. 1, an embodiment of a control device according to the present invention will be described. The control device 100 includes a first electronic control unit 110 and a second electronic control unit 111. The first electronic control unit is connectable to a first power device and the second electronic control unit 111 is connectable to a second power device.

The first electronic control unit 110 is interconnected to the second electronic control unit 111 via a bi-directional plastic optical fiber or via two single-directional plastic optical fibers 120. It is noted that here and in the following the same reference number is given to the two single-directional plastic optical fibers for one particular interconnection.

Each connection point electronic control unit/plastic optical fiber includes an opto-electronic coupler for transforming an optical signal into an electronic signal or for transforming an electronic signal into an optical signal, or both. By means of the two plastic optical fibers 120 information in the form of data signals can be exchanged between the two electronic control units 110, 111. For example, if the first electronic control unit 110 sends a data signal to the second electronic control unit 111, the electronic signal is transformed into an optical signal at the connection point of the first electronic control unit 110 and one of the plastic optical fiber 120, the optical signal is transmitted via this plastic optical fiber 120 to the connection point of the fiber with the second electronic control unit 111, where it is transformed back into an electronic signal that can be received by the second electronic control unit 111. In the same way, the second electronic control unit 111 can send data to the first electronic control unit 110 via the other plastic optical fiber 120.

Each connection point between the plastic optical fibers 120 and the electronic control units 110, 111 may include an opto-electronic coupler (this may also be the case for the embodiments described further below), wherein on an information sending side an electrical signal from one of the electronic control units drives a light source such as a light emitting diode (LED) and on a signal receiving side, a light receiving element such as a photo diode transforms an optical signal into an electrical signal that is received by one of the electronic control units.

When using two single-directional plastic optical fibers 120, each of them may contain only one sending side and one receiving side, provided at the respective ends of each fiber. Moreover, the same wavelength of light that transmits the information through the fibers may be used.

In the case of the bi-directional plastic optical fiber, the opto-electronic couplers operate in both directions, and each connection point to the electronic control units may contain a sending as well as a receiving element, and further, light with different wavelengths may be used, one for each direction. Different colors of light might be obtained for example, by using LED's with different colors, such as red and green, or by using light filters that mainly transmit light only in the respective color.

With reference to Fig. 2, an embodiment of a series control network according to the present invention will be described. In this embodiment, the series control network 200 includes three electronic control units 210, 211, 212, wherein the electronic control units 210 and 211 correspond to the electronic control units 110 and 111 of Fig. 1, respectively, and the interconnection between them in the form of a two plastic optical fibers 220 corresponds to the plastic optical fibers 120. A further electronic control unit 212 is interconnected to the electronic control unit 211 via a further plastic optical fibers 221.

In this way, a series control network 200 is formed, in which data cannot be only exchanged between neighboring electronic control units, but rather any of the electronic control units may exchange data with any one of the other electronic control units, for example, the electronic control units at the end of the series may exchange information. Obviously, this series can be further extended by connecting one or more further electronic control units to the ends of the series control network by further plastic optical fibers. Moreover, one of the electronic control units may serve as a master electronic control unit for the other electronic control units and synchronizes them. In particular, the electronic control unit 212 may, for example, also be a vehicle dynamic controller.

In the following, with reference to Fig. 3, an embodiment of a ring control network according to the invention will be described. The ring control network 300 includes three electronic control units 310, 311, 312, which correspond to the electronic control units 210, 211, 212 of Fig. 2. The plastic optical fibers 320, 321 correspond to the plastic optical fibers 220, 221 of Fig. 2. In the ring control network 300, further plastic optical fibers 322 are provided for interconnecting the electronic control units 310 and 312.

By means of this ring-like network of electronic control units and plastic optical fibers, data can be sent from one of the electronic control units to any one of the other electronic control units in both directions. If, for example, the interconnection via the fiber 322 would fail, so that the electronic control unit 312 may not directly send data to the electronic control unit 310, it is still possible to send the data along the ring in the other direction via the plastic optical fibers 321, the electronic control unit 311 and the plastic optical fibers 320. Thus, such a ring control network provides a fault-tolerant communication system between the electronic control units. Obviously, as already mentioned with respect to the description of Fig. 2, further electronic control units and plastic optical fibers can be included to form a larger ring-like network.

Similarly, for example the electronic control unit 312 may be a master electronic control unit, in particular a vehicle dynamic controller. Further, one of the electronic control units 310, 311, 312 may be designed such that it is able to detect a defective interconnection by sending a test signal, for example with a predetermined timing, in both directions along the ring control network and the other electronic control units may send a confirmation signal for confirming the reception of the test signal.

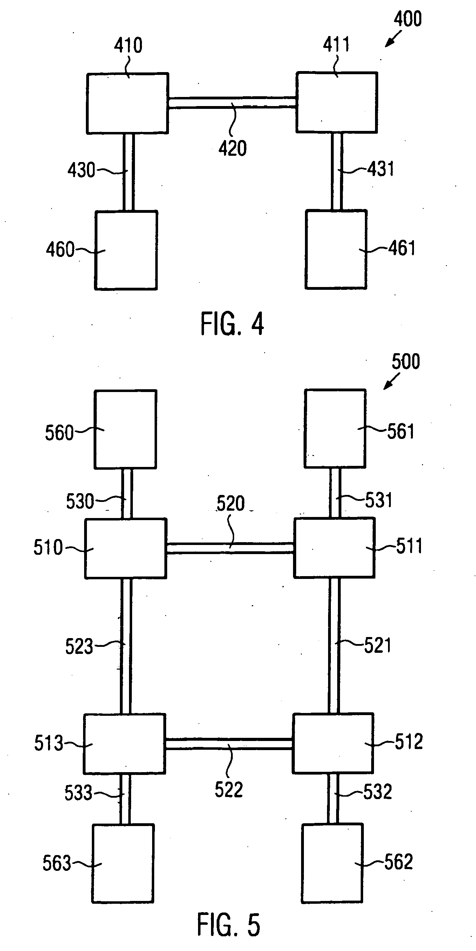

With reference to Fig. 4, an embodiment of a driving device according to the invention will be described in the following. This embodiment of the driving device according to the invention includes a first and a second electronic control unit 410 and 411, corresponding to the first and the second electronic control unit 110 and 111 of Fig. 1, respectively. These are interconnected by plastic optical fibers 420, corresponding to the fibers 120 of Fig. 1. Further, the driving device includes a first and a second power electronics units, respectively interconnected to the first and the second electronic control unit. Each of these further interconnections includes plastic optical fibers 430 and 431, respectively.

According to the prior art, the interconnections between the electronic control units and the power electronics units were designed with copper wires, whereas the usage of plastic optical fibers according to the present invention results in the benefits as already discussed in the summary of the present invention. Each of the electronic control units 410, 411 of the driving device 400 sends control signals to the respective power electronics units 460, 461, which in turn provide electric power to a first and a second electric motor, respectively connectable to them.

With reference to Fig. 5, an embodiment of a ring driving network according to the present invention will be described in the following. The ring driving network 500 includes four electronic control units 510, 511, 512, 513, which are interconnected in a ring-like manner via plastic optical fibers 520, 521, 522, 523. Further, the electronic control units 510, 511, 512, 513 are respectively connected to the power electronics units 560, 561, 562, 563. Such a ring driving network is, for example, capable to drive motors provided at each wheel of a four-wheeled vehicle with electrical power, wherein each motor in turn may brake the respective wheel.

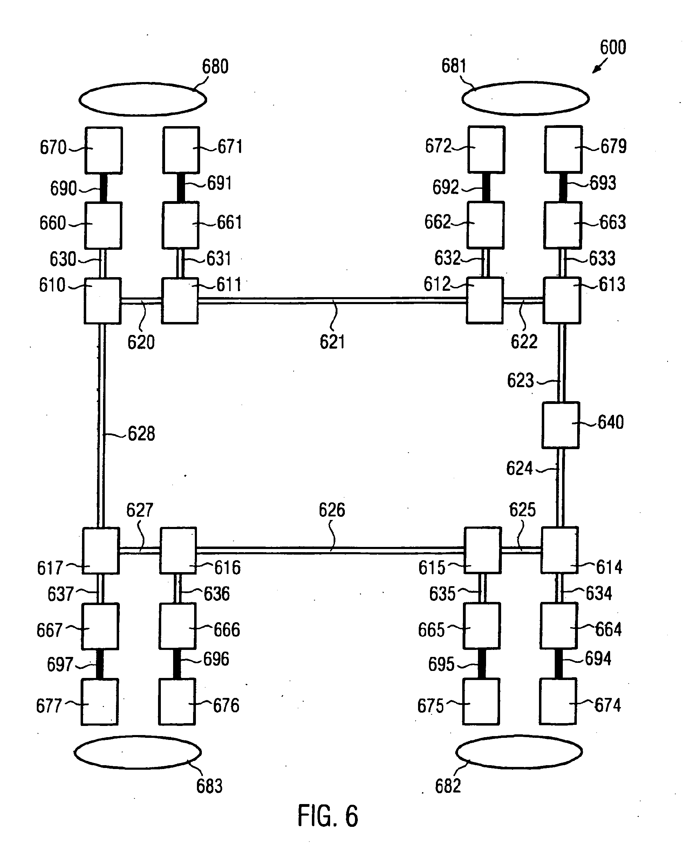

With respect to Fig. 6, an embodiment of an actuation system according to the present invention will be described in the following. This embodiment of the actuation system 600 includes eight electronic control units 610 to 617 and a vehicle dynamic controller 640 which are interconnected by plastic optical fibers 620 to 628 in a ring-like manner. Further, the electronic control units 610 to 617 are respectively interconnected to the power electronics units 660 to 667 by plastic optical fibers 630 to 637, and the power electronics units are respectively connected to electric motors 670 to 677 via driving lines to which electric power is supplied to the motors.

This actuation system 600 is arranged such that respectively two motors may operate a brake installation of the wheels 680 to 683. This arrangement provides a fault-tolerant actuation system in two ways. The first is that if one of the motors, one of the power electronics units, or one of the electronic control units, or an interconnection between them fails to operate, it is still possible to brake the respective wheel with the other motor that operates on the same wheel. The second way is that if one of the interconnections between the electronic control units is defective, it is still possible to transmit data between the electronic control units. In fact, if the direct interconnection between two neighboring electronic control units is defective, the remaining interconnections still form a series control network.

Of course, it should be understood that a wide range of changes and modifications can be made to the embodiments described above without departing from the scope of the present invention. It has, therefore, to be understood that the scope of the present invention is not limited to the embodiments described, but is defined by the appended claims.

## Claims

1. Driving device (400) for driving a first and a second electric motor with electric power, comprising
a first and a second electronic control unit (410, 411) which are interconnected by a bi-directional plastic optical fiber or two single-directional plastic optical fibers (420) through which data can be exchanged;
a first and a second power electronics unit (460, 461), connectable to the first and second electric motor, respectively,
wherein
the first and the second electronic control unit (410, 411) is interconnected to the first and the second power electronics unit (460, 461) by a first and a second bi-directional plastic optical fiber, respectively, or by respectively two single-directional plastic optical fibers (430, 431) through which the first and the second electronic control unit (410, 411) control the first and the second power electronics unit (460, 461), respectively.

2. Driving device (400) according to claim 1, wherein the first and the second electronic control unit (410, 411) are synchronized via the bi-directional plastic optical fiber or via the two single-directional plastic optical fibers (120).

3. Driving device (400) according to one of claims 1 or 2, wherein the first electronic control unit (410) may operate as a master electronic control unit for the second electronic control unit (411), such that the first electronic control unit (410) may control the second electronic control unit (411).

4. Driving device (400) according to claim 3, wherein the operation as the master electronic control unit can be exchanged among the first and the second electronic control unit (410, 411).

5. Driving device (400) according to claim 4, wherein the operation as the master electronic control unit can be exchanged periodically.

6. Series driving network, comprising
the driving device according to any one of claims 1 to 5,
at least one further electronic control unit, interconnected in series to the first or second electronic control unit, wherein
each interconnection comprises a bi-directional plastic optical fiber, or two single-directional plastic optical fibers through which data can be exchanged,
power electronics units, each connectable to a respective one of the electric motors, wherein
the electronic control units are respectively interconnected to a respective one of the power electronics units by a respective bi-directional plastic optical fiber or two respective single-directional plastic optical fibers, through which the electronic control units may control the respective power electronics units.

7. Series driving network according to claim 6, wherein one of the at least one further electronic control unit is a vehicle dynamic controller which serves as a master electronic control unit for the other electronic control units.

8. Series driving network according to claim 7, wherein the vehicle dynamic controller is not connectable to any of the power devices and each of the other electronic control units is connectable to respectively one of the power devices.

9. Ring driving network, comprising
a series driving network according to one of claims 6 - 8, wherein
the two electronic control units at the two ends of the series are interconnected by a further bi-directional plastic optical fiber or two further single-directional plastic optical fibers through which data can be exchanged.

10. Ring control network, comprising
at least three driving devices according to one of claims 1 - 5,
wherein the respective first electronic control units of the driving devices are further interconnected in a ring-like manner, such that each interconnection comprises a further bi-directional plastic optical fiber or two further single-directional plastic optical fibers through which data can be exchanged.

11. Ring control network, comprising
at least two driving devices according to one of claims 1 - 5, and
a vehicle dynamic controller,
wherein the respective first electronic control units of the driving devices and the vehicle dynamic controller are further interconnected in a ring-like manner, such that each interconnection comprises a further bi-directional plastic optical fiber or two further single-directional plastic optical fibers through which data can be exchanged.

12. Ring control network, comprising
at least three driving devices according to one of claims 1 - 5,
wherein all the electronic control units of the driving devices are further interconnected in a ring-like manner, such that each interconnection comprises a further bi-directional plastic optical fiber or two further single-directional plastic optical fibers through which data can be exchanged.

13. Ring control network, comprising
at least two driving devices according to one of claims 1 - 5, and
a vehicle dynamic controller (640),
wherein all the electronic control units (610 - 617) of the driving devices and the vehicle dynamic controller (640) are further interconnected in a ring-like manner, such that each interconnection comprises a further bi-directional plastic optical fiber or two further single-directional plastic optical fibers (621, 623, 624, 626, 628) through which data can be exchanged.

14. Ring control network according to one of claims 10 - 13, wherein four control devices are provided.

15. Ring control network according to one of claims 9 - 14, wherein a particular one of the electronic control units is designed such that it can detect a defective interconnection.

16. Ring control network according to claim 15, wherein the particular electronic control unit sends a test signal in both directions along the ring control network.

17. Ring control network according to claim 16, wherein the other electronic control units can send a confirmation signal to the particular electronic control unit, for confirming a reception of the test signal.

18. Actuation system (600), comprising
a series driving network according to one of claims 6 to 8, or
a ring driving network (610 - 617, 640, 620 - 628, 630 - 637, 660 - 667) according to claim 9 and
electric motors (670 - 677), each being connected to a respective one of the power electronics units (610 - 617) through at least one driving line (690 - 697).

19. Actuation system according to claim 18, wherein respectively two motors (670, 671; 672, 673; 674, 675; 676, 677) may operate the same installation of a vehicle.

20. Vehicle, in particular a brake-by-wire vehicle with four wheels, comprising
an actuation system according to claim 18 including four electric motors, provided one for each wheel of the vehicle, such that the electric motors may brake the respective wheels.

21. Vehicle, in particular a brake-by-wire vehicle with four wheels (680 - 683), comprising
an actuation system according to claim 19 including eight electric motors (670 - 677), provided two for each wheel of the vehicle, such that the respective two electric motors may operate a respective brake installation of the respective wheel.

22. Vehicle, in particular a drive-by-wire vehicle with four wheels, comprising
an actuation system according to claim 18 including two electric motors, provided one for each front wheel of the vehicle or one for each rear wheel of the vehicle, such that the electric motors may drive the respective wheels.

23. Vehicle, in particular a drive-by-wire vehicle with four wheels, comprising
an actuation system according to claim 18 including four electric motors, provided one for each wheel of the vehicle, such that the electric motors may drive the respective wheels.

24. Vehicle, in particular a steer-by-wire vehicle, comprising
an actuation system according to claim 19 including two electric motors, provided such that the two electric motors may operate a steering installation of the vehicle.

## Patentansprüche

1. Ansteuerungsvorrichtung (400) zum Ansteuern eines ersten und eines zweiten Elektromotors mit elektrischer Leistung, die umfasst:
eine erste und eine zweite elektronische Steuereinheit (410, 411), die durch eine bidirektionale Kunststoff-Lichtleitfaser oder durch zwei unidirektionale Kunststoff-Lichtleitfasern (420), über die Daten ausgetauscht werden können, miteinander verbunden sind;
eine erste und eine zweite Leistungselektronikeinheit (460, 461), die mit dem ersten bzw. dem zweiten Elektromotor verbunden werden können,
wobei
die erste und die zweite elektronische Steuereinheit (410, 411) mit der ersten bzw. mit der zweiten Leistungselektronikeinheit (460, 461) durch eine erste bzw. eine zweite bidirektionale Kunststoff-Lichtleitfaser oder durch jeweils zwei unidirektionale Kunststoff-Lichtleitfasern (430, 431) verbunden sind, über die die erste und die zweite elektronische Steuereinheit (410, 411) die erste bzw. die zweite Leistungselektronikeinheit (460, 461) steuern.

2. Ansteuerungsvorrichtung (400) nach Anspruch 1, wobei die erste und die zweite elektronische Steuereinheit (410, 411) über die bidirektionale Kunststoff-Lichtleitfaser oder über die zwei unidirektionalen Kunststoff-Lichtleitfasern (120) synchronisiert sind.

3. Ansteuerungsvorrichtung (400) nach einem der Ansprüche 1 oder 2, wobei die erste elektronische Steuereinheit (410) als elektronische Master-Steuereinheit für die zweite elektronische Steuereinheit (411) arbeiten kann, so dass die erste elektronische Steuereinheit (410) die zweite elektronische Steuereinheit (411) steuern kann.

4. Ansteuerungsvorrichtung (400) nach Anspruch 3, wobei der Betrieb als elektronische Master-Steuereinheit zwischen der ersten und der zweiten elektronischen Steuereinheit (410, 411) getauscht werden kann.

5. Ansteuerungsvorrichtung (400) nach Anspruch 4, wobei der Betrieb als elektronische Master-Steuereinheit periodisch getauscht werden kann.

6. Reihen-Ansteuerungsnetzwerk, das umfasst:
die Ansteuerungsvorrichtung nach einem der Ansprüche 1 bis 5,
wenigstens eine weitere elektronische Steuereinheit, die mit der ersten und mit der zweiten elektronischen Steuereinheit in Reihe geschaltet ist, wobei
jede Verbindung eine bidirektionale Kunststoff-Lichtleitfaser oder zwei unidirektionale Kunststoff-Lichtleitfasern umfasst, über die Daten ausgetauscht werden können,
Leistungselektronikeinheiten, wovon jede mit einem entsprechenden Elektromotor verbunden werden kann, wobei
die elektronischen Steuereinheiten jeweils mit einer entsprechenden Leistungselektronikeinheit durch jeweils eine bidirektionale Kunststoff-Lichtleitfaser oder durch jeweils zwei unidirektionale Kunststoff-Lichtleitfasern verbunden sind, über die die elektronischen Steuereinheiten die entsprechenden Leistungselektronikeinheiten steuern können.

7. Reihen-Ansteuerungsnetzwerk nach Anspruch 6, wobei eine der wenigstens einen weiteren elektronischen Steuereinheit ein Fahrzeugdynamik-Controller ist, der als elektronische Master-Steuereinheit für die anderen elektronischen Steuereinheiten dient.

8. Reihen-Ansteuerungsnetzwerk nach Anspruch 7, wobei der Fahrzeugdynamik-Controller nicht mit irgendeiner der Leistungsvorrichtungen verbunden werden kann und jede der anderen elektronischen Steuereinheiten mit einer entsprechenden Leistungsvorrichtung verbunden werden kann.

9. Ring-Ansteuerungsnetzwerk, das umfasst;
ein Reihen-Ansteuerungsnetzwerk nach einem der Ansprüche 6-8, wobei
die zwei elektronischen Steuereinheiten an den beiden Enden der Reihe durch eine weitere bidirektionale Kunststoff-Lichtleitfaser oder durch zwei weitere unidirektionale Kunststoff-Lichtleitfasern verbunden sind, über die Daten ausgetauscht werden können.

10. Ring-Steuerungsnetzwerk, das umfasst:
wenigstens drei Vorrichtungen nach einem der Ansprüche 1-5,
wobei die jeweiligen ersten elektronischen Steuereinheiten der Ansteuerungsvorrichtungen ferner ringartig miteinander verbunden sind, so dass jede Verbindung eine weitere bidirektionale Kunststoff-Lichtleitfaser oder zwei weitere unidirektionale Kunststoff-Lichtleitfasern umfasst, über die Daten ausgetauscht werden können.

11. Ring-Steuerungsnetzwerk, das umfasst:
wenigstens zwei Ansteuerungsvorrichtungen nach einem der Ansprüche 1-5 und
einen Fahrzeugdynamik-Controller,
wobei die jeweiligen ersten elektronischen Steuereinheiten der Ansteuerungsvorrichtungen und der Fahrzeugdynamik-Controller ferner ringartig miteinander verbunden sind, so dass jede Verbindung eine weitere bidirektionale Kunststoff-Lichtleitfaser oder zwei weitere unidirektionale Kunststoff-Lichtleitfasern umfasst, über die Daten ausgetauscht werden können.

12. Ring-Steuerungsnetzwerk, das umfasst:
wenigstens drei Ansteuerungsvorrichtungen nach einem der Ansprüche 1-5,
wobei alle elektronischen Steuereinheiten der Ansteuerungsvorrichtungen ferner ringartig miteinander verbunden sind, so dass jede Verbindung eine weitere bidirektionale Kunststoff-Lichtleitfaser oder zwei weitere unidirektionale Kunststoff-Lichtleitfasern umfasst, über die Daten ausgetauscht werden können.

13. Ring-Steuerungsnetzwerk, das umfasst:
wenigstens zwei Ansteuerungsvorrichtungen nach einem der Ansprüche 1-5 und
einen Fahrzeugdynamik-Controller (640),
wobei alle elektronischen Steuereinheiten (610-617) der Ansteuerungsvorrichtungen und der Fahrzeugdynamik-Controller (640) ferner ringartig miteinander verbunden sind, so dass jede Verbindung eine weitere bidirektionale Kunststoff-Lichtleitfaser oder zwei weitere unidirektionale Kunststoff-Lichtleitfasern (621, 623, 624, 626, 628) umfasst, über die Daten ausgetauscht werden können.

14. Ring-Steuerungsnetzwerk nach einem der Ansprüche 10-13, wobei vier Steuervorrichtungen vorgesehen sind.

15. Ring-Steuerungsnetzwerk nach einem der Ansprüche 9-14, wobei eine Bestimmte der elektronischen Steuereinheiten so entworfen ist, dass sie eine fehlerhafte Verbindung detektieren kann.

16. Ring-Steuerungsnetzwerk nach Anspruch 15, wobei die bestimmte elektronische Steuereinheit ein Prüfsignal in beiden Richtungen längs des Ring-Steuerungsnetzwerks sendet.

17. Ring-Steuerungsnetzwerk nach Anspruch 16, wobei die anderen elektronischen Steuereinheiten ein Bestätigungssignal zu der bestimmten elektronischen Steuereinheit senden können, um einen Empfang des Prüfsignals zu bestätigen.

18. Betätigungssystem (600), das umfasst:
ein Reihen-Ansteuerungsnetzwerk nach einem der Ansprüche 6 bis 8 oder
ein Ring-Ansteuerungsnetzwerk (610-617, 640, 620-628, 630-637, 660-667) nach Anspruch 9 und
Elektromotoren (670-677), wovon jeder mit einer entsprechenden Leistungselekktronikeinheit (610-617) über wenigstens eine Ansteuerungsleitung (690-697) verbunden ist.

19. Betätigungssystem nach Anspruch 18, wobei jeweils zwei Motoren (670, 671; 672, 673; 674, 675; 676, 677) dieselbe Anlage eines Fahrzeugs betreiben können.

20. Fahrzeug, insbesondere ein Brake-By-Wire-Fahrzeug mit vier Rädern (680-683), das umfasst:
ein Betätigungssystem nach Anspruch 18, das vier Elektromotoren enthält, wovon jeder für ein Rad des Fahrzeugs vorgesehen ist, so dass die Elektromotoren die jeweiligen Räder bremsen können.

21. Fahrzeug, insbesondere ein Brake-By-Wire-Fahrzeug mit vier Rädern (680-683), das umfasst:
ein Betätigungssystem nach Anspruch 19, das acht Elektromotoren (670-677) enthält, wovon jeweils zwei für jedes Rad des Fahrzeugs vorgesehen sind, so dass die zwei jeweiligen Elektromotoren eine entsprechende Bremsanlage des entsprechenden Rades betätigen können.

22. Fahrzeug, insbesondere ein Drive-By-Wire-Fahrzeug mit vier Rädern, das umfasst:
ein Betätigungssystem nach Anspruch 18, das zwei Elektromotoren enthält, wovon einer für jedes Vorderrad des Fahrzeugs oder wovon einer für jedes Hinterrad des Fahrzeugs vorgesehen ist, so dass die Elektromotoren die jeweiligen Räder antreiben können.

23. Fahrzeug, insbesondere ein Drive-By-Wire-Fahrzeug mit vier Rädern, das umfasst:
ein Betätigungssystem nach Anspruch 18, das vier Elektromotoren enthält, wovon für jedes Rad des Fahrzeugs jeweils einer vorgesehen ist, so dass die Elektromotoren die jeweiligen Räder antreiben können.

24. Fahrzeug, insbesondere ein Steer-By-Wire-Fahrzeug, das umfasst:
ein Betätigungssystem nach Anspruch 19, das zwei Elektromotoren enthält, die in der Weise vorgesehen sind, dass die zwei Elektromotoren eine Lenkanlage des Fahrzeugs betätigen können.

## Revendications

1. Dispositif d'entraînement (400) pour entraîner un premier moteur électrique et un deuxième moteur électrique avec une puissance électrique, comprenant
des première et deuxième unités de commande électroniques (410, 411) qui sont interconnectées par une fibre optique en plastique bidirectionnelle ou deux fibres optiques en plastique unidirectionnelles (420) à travers lesquelles des données peuvent être échangées ;
des première et deuxième unités électroniques de puissance (460, 461) pouvant être respectivement connectées aux premier et deuxième moteurs électriques,
dans lequel
les première et deuxième unités de commande électroniques (410, 411) sont interconnectées aux première et deuxième unités électroniques de puissance (460, 461) respectivement par des première et deuxième fibres optiques en plastique bidirectionnelles ou respectivement par deux fibres optiques en plastique unidirectionnelles (430, 431) à travers lesquelles les première et deuxième unités de commande électroniques (410, 411) commandent respectivement les première et deuxième unités électroniques de puissance (460, 461).

2. Dispositif d'entraînement (400) selon la revendication 1, dans lequel les première et deuxième unités de commande électroniques (410, 411) sont synchronisées par le biais de la fibre optique en plastique bidirectionnelle ou par le biais des deux fibres optiques en plastique unidirectionnelles (120).

3. Dispositif d'entraînement (400) selon la revendication 1 ou 2, dans lequel la première unité de commande électronique (410) peut fonctionner en tant qu'unité de commande électronique maître pour la deuxième unité de commande électronique (411), de sorte que la première unité de commande électronique (410) puisse commander la deuxième unité de commande électronique (411).

4. Dispositif d'entraînement (400) selon la revendication 3, dans lequel le fonctionnement en tant qu'unité de commande électronique maître peut être échangé entre les première et deuxième unités de commande électroniques (410, 411).

5. Dispositif d'entraînement (400) selon la revendication 4, dans lequel le fonctionnement en tant qu'unité de commande électronique maître peut être échangé périodiquement.

6. Réseau d'entraînement en série, comprenant
le dispositif d'entraînement selon l'une quelconque des revendications 1 à 5,
au moins une autre unité de commande électronique, interconnectée en série avec la première ou deuxième unité de commande électronique, dans lequel
chaque interconnexion comprend une fibre optique en plastique bidirectionnelle ou deux fibres optiques en plastique unidirectionnelles à travers lesquelles des données peuvent être échangées,
des unités électroniques de puissance, chacune pouvant être connectée à l'un respectif des moteurs électriques, dans lequel
les unités de commande électroniques sont respectivement interconnectées à l'une respective des unités électroniques de puissance respectivement par une fibre optique en plastique bidirectionnelle ou deux fibres optiques en plastique unidirectionnelles, à travers lesquelles les unités de commande électroniques peuvent commander les unités électroniques de puissance respectives.

7. Réseau d'entraînement en série selon la revendication 6, dans lequel l'une de l'au moins une autre unité de commande électronique est un contrôleur dynamique de véhicule qui sert d'unité de commande électronique maître pour les autres unités de commande électroniques.

8. Réseau d'entraînement en série selon la revendication 7, dans lequel le contrôleur dynamique de véhicule ne peut pas être connecté à l'un des dispositifs de puissance et chacune des autres unités de commande électroniques peut être connectée respectivement à l'un des dispositifs de puissance.

9. Réseau d'entraînement en anneau, comprenant
un réseau d'entraînement en série selon l'une des revendications 6 à 8, dans lequel
les deux unités de commande électroniques aux deux extrémités de la série sont interconnectées par une autre fibre optique en plastique bidirectionnelle ou par deux autres fibres optiques en plastique unidirectionnelles à travers lesquelles des données peuvent être échangées.

10. Réseau de commande en anneau, comprenant
au moins trois dispositifs d'entraînement selon l'une des revendications 1 à 5,
dans lequel les premières unités de commande électroniques respectives des dispositifs d'entraînement sont en outre interconnectées en anneau, de sorte que chaque interconnexion comprenne une autre fibre optique en plastique bidirectionnelle ou deux autres fibres optiques en plastique unidirectionnelles à travers lesquelles des données peuvent être échangées.

11. Réseau de commande en anneau, comprenant
au moins deux dispositifs d'entraînement selon l'une des revendications 1 à 5, et
un contrôleur dynamique de véhicule,
dans lequel les premières unités de commande électroniques respectives des dispositifs d'entraînement et le contrôleur dynamique de véhicule sont en outre interconnectés en anneau, de sorte que chaque interconnexion comprenne une autre fibre optique en plastique bidirectionnelle ou deux autres fibres optiques en plastique unidirectionnelles à travers lesquelles des données peuvent être échangées.

12. Réseau de commande en anneau, comprenant
au moins trois dispositifs d'entraînement selon l'une des revendications 1 à 5,
dans lequel toutes les unités de commande électroniques des dispositifs d'entraînement sont en outre interconnectées en anneau, de sorte que chaque interconnexion comprenne une autre fibre optique en plastique bidirectionnelle ou deux autres fibres optiques en plastique unidirectionnelles à travers lesquelles des données peuvent être échangées.

13. Réseau de commande en anneau, comprenant
au moins deux dispositifs d'entraînement selon l'une des revendications 1 à 5, et
un contrôleur dynamique de véhicule (640),
dans lequel toutes les unités de commande électroniques (610-617) des dispositifs d'entraînement et le contrôleur dynamique de véhicule (640) sont en outre interconnectés en anneau, de sorte que chaque interconnexion comprenne une autre fibre optique en plastique bidirectionnelle ou deux autres fibres optiques en plastique unidirectionnelles (621, 623, 624, 626, 628) à travers lesquelles des données peuvent être échangées.

14. Réseau de commande en anneau selon l'une des revendications 10 à 13, dans lequel quatre dispositifs de commande sont fournis.

15. Réseau de commande en anneau selon l'une des revendications 9 à 14, dans lequel l'une particulière des unités de commande électroniques est conçue de manière à pouvoir détecter une interconnexion défectueuse.

16. Réseau de commande en anneau selon la revendication 15, dans lequel l'unité de commande électronique particulière envoie un signal de test dans les deux sens le long du réseau de commande en anneau.

17. Réseau de commande en anneau selon la revendication 16, dans lequel les autres unités de commande électroniques peuvent envoyer un signal de confirmation à l'unité de commande électronique particulière pour confirmer une réception du signal de test.

18. Système d'actionnement (600), comprenant
un réseau d'entraînement en série selon l'une des revendications 6 à 8, ou
un réseau d'entraînement en anneau (610-617, 640, 620-628, 630-637, 660-667) selon la revendication 9, et
des moteurs électriques (670-677), chacun étant connecté à l'une respective des unités électroniques de puissance (610-617) à travers au moins une ligne d'entraînement (690-697).

19. Système d'actionnement selon la revendication 18, dans lequel deux moteurs (670, 671 ; 672, 673 ; 674, 675 ; 676, 677) peuvent faire fonctionner la même installation d'un véhicule.

20. Véhicule, en particulier un véhicule à freinage par fil avec quatre roues, comprenant
un système d'actionnement selon la revendication 18 comprenant quatre moteurs électriques, fournis pour chaque roue du véhicule, de sorte que les moteurs électriques puissent freiner les roues respectives.

21. Véhicule, en particulier un véhicule à freinage par fil avec quatre roues (680-683), comprenant
un système d'actionnement selon la revendication 19 comprenant huit moteurs électriques (670-677), fournis à raison de deux pour chaque roue du véhicule, de sorte que deux moteurs électriques puissent faire fonctionner une installation de frein respective de la roue respective.

22. Véhicule, en particulier un véhicule à entraînement par fil avec quatre roues, comprenant
un système d'actionnement selon la revendication 18 comprenant deux moteurs électriques, fournis à raison d'un pour chaque roue avant du véhicule ou d'un pour chaque roue arrière du véhicule, de sorte que les moteurs électriques puissent entraîner les roues respectives.

23. Véhicule, en particulier un véhicule à entraînement par fil avec quatre roues, comprenant
un système d'actionnement selon la revendication 18 comprenant quatre moteurs électriques, fournis à raison d'un pour chaque roue du véhicule, de sorte que les moteurs électriques puissent entraîner les roues respectives.

24. Véhicule, en particulier un véhicule à direction par fil, comprenant
un système d'actionnement selon la revendication 19 comprenant deux moteurs électriques, fournis de sorte que les moteurs électriques puissent entraîner une installation de direction du véhicule.
